# EUROPEAN PATENT SPECIFICATION

(11) **EP 3 038 226 B1**
(45) Date of publication and mention of the grant of the patent: **03.08.2022**
(21) Application number: 14382574.3
(22) Date of filing: 26.12.2014
(51) Int. Cl.: H02J 7/00, H01H 33/59

(54) **System and method for supplying electric power**
System und Verfahren zur Stromversorgung
Système et procédé pour alimenter en énergie électrique

(43) Date of publication of application: 29.06.2016
(73) Proprietor: Fico Triad, S.A., 08028 Barcelona (ES)
(72) Inventor: SALA MASIP, Enric, 08232 VILADECAVALLS (Barcelona) (ES)
(74) Representative: Carpintero Lopez, Francisco

(56) References cited:
- EP-A1- 2 009 759
- EP-A1- 2 320 535
- US-A1- 2006 071 618
- US-A1- 2010 133 914
- US-A1- 2012 007 657
- US-A1- 2014 293 666

## Description

### Object of the invention

The present invention refers in general to a battery pack for an electric or hybrid vehicle comprising systems for supplying in a controlled manner, electric power to a load. More specifically the invention refers to a battery pack for an electric or hybrid vehicle comprising a system for connecting and disconnecting a power source, for example a battery, to and from a load.

An object of the invention is to reduce the weight, size and cost of a system for connecting and disconnecting a power source from a load.

### Background of the invention

Electric vehicles are driven by an electric propulsion system that receives power from a battery pack, in some cases in combination with a conventional combustion engine, as is the case of hybrid vehicles.

A battery pack typically includes a group of batteries, and a control module for controlling current flowing between the battery pack and the electrical propulsion system.

Additionally, electric vehicles include a charger for rectifying an external alternating current (AC) into a constant direct current (DC) used to charge the battery. In turn, the DC power supplied by the battery is converted by means of an inverter into power suitable to feed a motor for driving the electric vehicle.

During use of the electric vehicle, the battery is repeatedly connected and disconnected from a load, that is, the inverter connected to the motor. For that purpose, electromechanical switches are connected to both positive and negative poles of the battery, and are dimensioned to open or close high-current paths between the battery pack and the electrical propulsion system.

These high-voltage switches typically consist in multipole switches, such as: high-power relays, contactors, thermal breakers, etc., with the capability of interrupting an electric current and extinguishing an electric arc generated upon such electric current interruption. These switches are controlled by a battery control module, such as to open and close all the poles of the battery simultaneously.

Since the breaking power capability of a switch is directly related to its size and dimensions, these high-power relays usually are bulky and expensive components that contribute to the battery pack weight, and deteriorate in time affecting the reliability of the battery pack.

Even if electric vehicles are becoming increasingly economical, in the development of this type of vehicles, there is the permanent need for reducing both the purchase price and operational cost.

The U.S. Patent publication US2014/293666A1 relates to a circuit arrangement for suppressing an arc occurring during a switching process, wherein a current bypass path comprises a PCT resistor connected in series with a fuse. The current bypass path is provided in parallel with a switch.

### Summary of the invention

The present invention is defined in the attached independent claims, and it overcomes the above-mentioned drawbacks of the prior art by providing a battery pack for an electric or hybrid vehicle comprising an electric power supply system capable of connecting and disconnecting a power source by sequentially connecting and disconnecting the poles of the same.

Due to this sequential connection and disconnection process according to the invention, only one switching device with full breaking capability, that is, capability of interrupting a current and extinguishing the electric arc, is used in one pole for interrupting or allowing current circulation through the power source, whereas the other poles of the power source are electrically isolated by switching devices of reduced breaking capability and therefore of reduced size and cost.

Therefore, the invention refers to a battery pack for an electric or hybrid vehicle according to claim 1.

Preferably, the power source comprises a battery and the first pole is a positive pole of the battery and the second pole is a negative pole of the battery. Alternatively, the first pole is the negative pole of the battery and the second pole is the positive pole of the battery. In this description, the term battery should be interpreted to refer either to a single battery or to a set of interconnected batteries.

This circuit breaker device is selected for each particular application such that its nominal power is suitable for the nominal power of the power source and for interrupting the same, but additionally the power switching capability of the circuit breaker device is enough to withstand and/or extinguish the electric arc appearing in the interruption and connection of the electric current through the power source.

On the other hand, a secondary switch device is connected at the second pole, wherein the nominal power of this switch device is suitable for the nominal power of the power source, that is, to withstand the circulation of the nominal current provided by the power source. However this switch device is selected such that its power switching capability is lower than the power switching capability of the circuit breaker device. Preferably, the switch device is not suitable for breaking current flowing through the power source and withstanding and/or extinguishing the electric arc.

The electric power supply system further comprises a control module operatively associated with the circuit breaker and with the switch device for controlling their operation, that is, to selectively command the circuit breaker and with the switch device to open or close. This control module is therefore provided for alternatively connecting and disconnecting the power source from a load, for example, an inverter connected to a motor of an electric vehicle.

This control module is adapted to sequentially open and close the circuit breaker and the switch device, such that the control module opens or closes the switch device, only when no current is flowing through the circuit breaker device.

The control module preferably comprises an electronic programmable device, and the above-mentioned adaptation for sequentially opening and closing the circuit breaker and the switch device, is a suitable program stored in said electronic programmable device to implement said function.

More in detail, the control module is adapted such that, for connecting the power source to supply electric power, the control module first closes the switch device before closing the circuit breaker device. Additionally, the control module is also adapted such that, for interrupting the supply of electric power, the control module opens the circuit breaker device before opening the switch device.

In this way, the switch device is ordered to transit to the open state or to the closed state only when no current is flowing through the power source. The technical effect of this, is that no electric arc would ever appear in the switch device in its transitions to open state or closed state; hence, the switch device can be selected to have a power switching capability lower than the power switching capability of the circuit breaker device. The advantage of using a switch device of limited breaking capability is that this switch device is much lighter and cheaper than a switching device with full breaking capability.

In this way, the switch device is ordered to transit to the open state or to the closed state only when no current is flowing through the switch device. The technical effect of this is that no electric arc would ever appear in the switch device in its transitions to open state or closed state, and for that the switch device can be selected to have a power switching capability lower than the power switching capability of the circuit breaker device.

Some advantages of the invention are the following:
- reduced cost, due to the lower power switching capability of the switch device,
- reduced dimensions as requested in electric vehicles,
- reduced weight as requested in electric vehicles.

### Brief description of the drawings

Preferred embodiments of the invention are henceforth described with reference to the accompanying drawings, wherein:

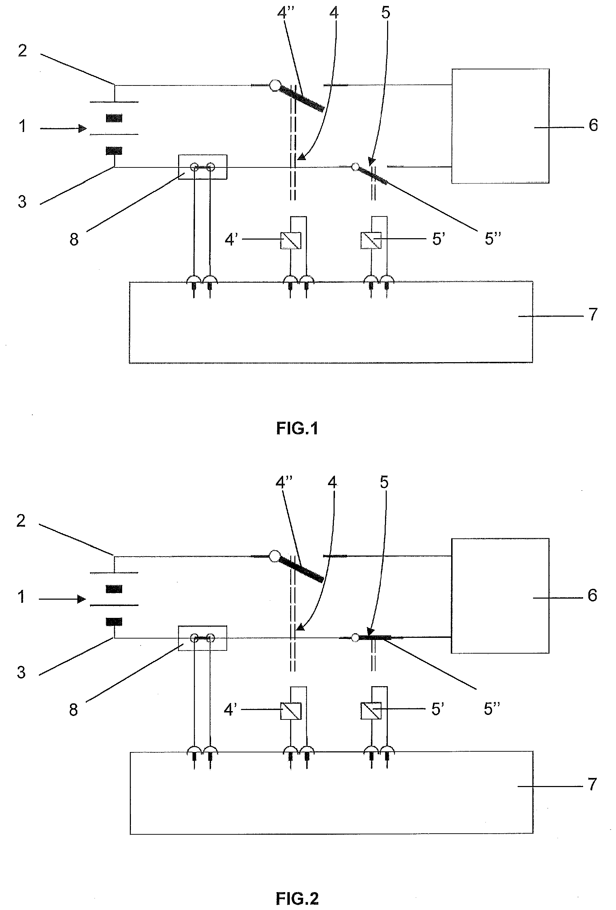

Figures 1, 2 and 3 show an electric diagram of an electric power supply system according to the invention in different operative stages of the first and second relays.

### Preferred embodiment of the invention

Figure 1 shows a preferred example of an electric power supply system, which comprises a power source, in this case a battery (1) having positive and negative poles (2,3), a circuit breaker device, in this case a main relay (4) with full breaking capability, which is connected between the positive pole (2) of the battery and a first pole of a load (6), such that this main relay (4) is responsible for breaking the current through the power source during the entire operation of the system, and under any load conditions.

A switch device, in this case a secondary relay (5), is connected between the negative pole (3) and another pole of the load (6). The role of this secondary relay (5) is to electrically isolate the negative pole of the battery, but it will never transit to closed state or open state while current is circulating through it, that is, it will never be used for interrupting or enabling current circulation. For this reason, this secondary relay (5) is selected such as its power switching capability is lower than the power switching capability of the main relay (4).

A control module (7), which may comprise any type of programmable electronic device, is operatively associated with the main relay (4) and with the secondary relay (5), in a known manner, for controlling their operation to alternatively connect and disconnect the power source (1) from the load (6), the latter one consisting for example in a AC motor of an electric vehicle or other electric loads in the vehicle (not shown). For that operative association, the control module (7) is connected with the corresponding electromagnets (4',5') of the relays (4,5) which operate upon excitation the corresponding switches (4",5") of the relays (4,5).

The control module (7) is programmed for sequentially opening and closing the main and secondary relays (4,5), such that the control module opens or closes the secondary relay (5) only when no current is flowing through the main relay (4). More specifically, the control module is programmed such that, for connecting the battery (1) to the load (6), the control module first closes the secondary relay (5) before closing the main relay (4). Additionally, the control module is programmed such that, for disconnecting the battery (1) from the load (6), the control module opens the main relay (4) before opening the secondary relay (5).

The system comprises a current detecting means for detecting current flowing through the secondary relay (5), for example a shunt resistor (8) connected in series with the switch (5") of the secondary relay (5). This shunt resistor (8) is also connected with the control module (7), and the control module (7) is also adapted for controlling the main and/or the secondary relays (4,5) as a function of a signal received from the shunt resistor (8), to assure that the secondary relay (5) is only ordered to transit to its open or closed state only when no current is flowing through the battery (1).

The closing and opening sequences of the system and method of the present invention are illustrated in the enclosed figures, such that the closing sequence corresponds to figures 1, 2 and 3, whereas the opening sequence corresponds to figures 1, 2 and 3 when looked at reverse order.

In the closing sequence, both relays (4,5) are initially open (figure 1). Then the control module (7) first commands the secondary relay (5) to close, while the main relay (4) is maintained in its open state, such that at that moment no current is flowing through the secondary relay (5) (figure 2). The control module (7) waits for a delay settling time in order to ensure that the secondary relay (5) is completely closed. Alternatively, instead of programmed delay time, a dedicated circuit for contact status detection can be used. Finally, the control module (7) orders the main relay (4) to close (figure 3), enabling therefore the circulation of current between the battery (1) and the load (6).

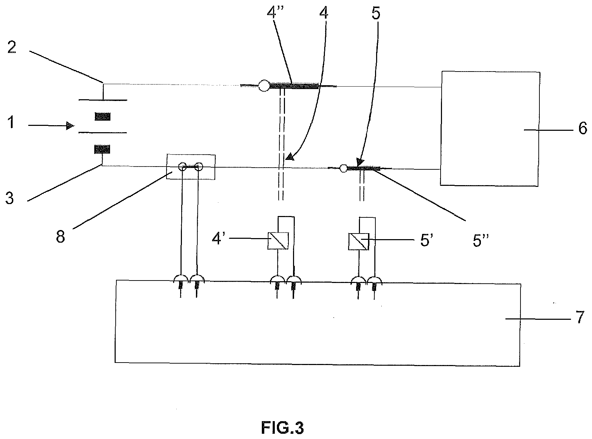

In the opening sequence, both relays (4,5) are initially closed and current is flowing between the battery and the load (figure 3). Then the control module (7) first commands the main relay (4) to open (figure 2), interrupting the circulation of current. Any electric arc appearing in that process is extinguished at the main relay (4). The control module (7) waits for a delay settling time in order to ensure the main relay (4) is completely open. Alternatively, a dedicated circuit for contact status detection can be used. Alternatively, this detection process is performed with the shunt resistor (8) to ensure that the current is zero. Finally, the control module (7) orders the secondary relay (5) to open (figure 1) when no current is circulating through it, and therefore only with the purpose of electrically isolating both poles of the battery (1).

It would be noted that the secondary relay (5) can be selected to withstand no more than the nominal current of the battery (1) for the connection state of the same as shown in figure 3.

The same system shown in the attached figures, and a similar sequence as the one described previously for connecting and disconnecting for the main and secondary relays (4,5), can be used for charging the battery (1) from the load (6) when this load is generating power, as it may be the case of an AC motor of an electric vehicle.

Other preferred embodiments of the present invention are described in the appended dependent claims and the multiple combinations thereof.

## Claims

1. Battery pack for an electric or hybrid vehicle comprising an electric power supply system, that comprises:
a power source having first and second poles (2,3),
a circuit breaker device (4) connected at the first pole (2) for alternatively breaking and enabling circulation of current there-through,
a switch device (5) connected at the second pole (3),
a control module (7) operatively associated with the circuit breaker device (4) and with the switch device (5) for controlling their operation to alternatively connect and disconnect the power source (1),
wherein the control module (7) is adapted for sequentially opening and closing the circuit breaker device (4) and the switch device (5), such that the control module (7) opens or closes the switch device (5) only when no current is flowing through the circuit breaker device (4),
wherein the control module (7) is adapted such that, for connecting the power source to supply electric power, the control module (7) closes the switch device (5) before closing the circuit breaker device (4),
wherein the control module (7) is also adapted such that, for interrupting the supply of electric power, the control module (7) opens the circuit breaker device (4) before opening the switch device (5),
and wherein the switch device (5) has a power switching capability lower than the circuit breaker device (4) capability,
**characterized in that** the switch device (5) is only connected at the second pole (3) and to one pole of a load (6), and
further comprising current detecting means (8) for detecting current flowing through the switch device (5), and wherein the current detecting means (8) are in communication with the control module (7), and the control module (7) is also adapted for controlling the circuit breaker device (4) and/or the switch device (5) as a function of a signal received from the current detecting means (8), to assure that the switch device (5) is ordered to transit to its open or closed state only when no current is flowing through the battery (1).

2. System according to claim 1, wherein the power source comprises a battery (1), and wherein the first pole (2) is the positive or the negative pole of the battery (1) and the second pole (3) is the other positive or negative pole of the battery (1).

3. System according to any of the preceding claims, wherein the control module (7) comprises an electronic programmable device, which is programmed for sequentially opening and closing the circuit breaker device (4) and the switch device (5).

## Patentansprüche

1. Batteriepack für ein ein Stromversorgungssystem umfassendes Elektro- oder Hybridfahrzeug, umfassend:
eine Stromquelle mit einem ersten und einem zweiten Pol (2, 3),
eine Unterbrechervorrichtung (4), die mit dem ersten Pol (2) verbunden ist, um alternativ Stromfluss zu unterbrechen und freizugeben,
eine Schaltvorrichtung (5), die mit dem zweiten Pol (3) verbunden ist,
ein Steuerungs-Modul (7), das funktional mit der Unterbrechervorrichtung (4) sowie mit der Schaltvorrichtung (5) verbunden ist, um ihre Funktion zum alternativen Verbinden und Trennen der Stromquelle (1) zu steuern,
wobei das Steuerungs-Modul (7) so eingerichtet ist, dass es die Unterbrechervorrichtung (4) und die Schaltvorrichtung (5) sequenziell öffnet und schließt, so dass das Steuerungs-Modul (7) die Schaltvorrichtung (5) nur dann öffnet oder schließt, wenn kein Strom durch die Unterbrechervorrichtung (4) fließt,
das Steuerungs-Modul (7) so eingerichtet ist, dass das Steuerungs-Modul (7), um Verbindung mit der Stromquelle für Stromversorgung herzustellen, die Schaltvorrichtung (5) schließt, bevor es die Unterbrechervorrichtung (4) schließt,
das Steuerungs-Modul (7) darüber hinaus so eingerichtet ist, dass das Steuerungs-Modul (7) zum Unterbrechen der Stromversorgung die Unterbrechervorrichtung (4) öffnet, bevor es die Schaltvorrichtung (5) öffnet,
und die Schaltvorrichtung (5) eine Stromschalt-Kapazität hat, die niedriger ist als die Kapazität der Unterbrechervorrichtung (4),
**dadurch gekennzeichnet, dass** die Schaltvorrichtung (5) nur mit dem zweiten Pol (3) und mit einem Pol einer Last (6) verbunden ist, und
des Weiteren umfassend eine Stromerfassungseinrichtung (8) zum Erfassen von durch die Schaltvorrichtung (5) fließendem Strom, wobei die Stromerfassungseinrichtung (8) in Verbindung mit dem Steuerungs-Modul (7) steht, und das Steuerungs-Modul (7) darüber hinaus so eingerichtet ist, dass es die Unterbrechervorrichtung (4) und/oder die Schaltvorrichtung (5) in Abhängigkeit von einem Signal steuert, das von der Stromerfassungseinrichtung (8) empfangen wird, um sicherzustellen, dass die Schaltvorrichtung (5) angewiesen wird, nur dann in ihren geöffneten oder geschlossenen Zustand überzugehen, wenn kein Strom durch die Batterie (1) fließt.

2. System nach Anspruch 1, wobei die Stromquelle eine Batterie (1) umfasst, und der erste Pol (2) der positive oder der negative Pol der Batterie (1) ist und der zweite Pol (3) der andere von dem positiven oder negativen Pol der Batterie (1) ist.

3. System nach einem der vorangehenden Ansprüche, wobei das Steuerungs-Modul (7) eine programmierbare elektronische Vorrichtung umfasst, die zum sequentiellen Öffnen und Schließen der Unterbrechervorrichtung (4) und der Schaltvorrichtung (5) programmiert ist.

## Revendications

1. Bloc-batterie pour un véhicule électrique ou hybride comprenant un système d'alimentation en énergie électrique, qui comprend :
une source d'énergie comportant des premier et second pôles (2, 3),
un dispositif coupe-circuit (4) connecté au premier pôle (2) pour interrompre et permettre alternativement une circulation de courant à travers celui-ci,
un dispositif de commutation (5) connecté au second pôle (3),
un module de commande (7) associé en fonctionnement au dispositif coupe-circuit (4) et au dispositif de commutation (5) pour commander leur fonctionnement pour connecter et déconnecter alternativement la source d'énergie (1),
dans lequel le module de commande (7) est adapté pour ouvrir et fermer de manière séquentielle le dispositif coupe-circuit (4) et le dispositif de commutation (5), de manière que le module de commande (7) ouvre ou ferme le dispositif de commutation (5) seulement quand aucun courant ne circule à travers le dispositif coupe-circuit (4),
dans lequel le module de commande (7) est adapté de manière que, pour connecter la source d'énergie pour délivrer de l'énergie électrique, le module de commande (7) ferme le dispositif de commutation (5) avant de fermer le dispositif coupe-circuit (4),
dans lequel le module de commande (7) est également adapté de manière que, pour interrompre l'alimentation en énergie électrique, le module de commande (7) ouvre le dispositif coupe-circuit (4) avant d'ouvrir le dispositif de commutation (5),
et dans lequel le dispositif de commutation (5) a une capacité de commutation d'énergie inférieure à la capacité du dispositif coupe-circuit (4),
**caractérisé en ce que** le dispositif de commutation (5) est connecté seulement au second pôle (3) et à un pôle d'une charge (6), et
comprenant en outre des moyens de détection de courant (8) pour détecter un courant circulant à travers le dispositif de commutation (5), et dans lequel les moyens de détection de courant (8) sont en communication avec le module de commande (7), et le module de commande (7) est également adapté pour commander le dispositif coupe-circuit (4) et/ou le dispositif de commutation (5) en fonction d'un signal reçu à partir des moyens de détection de courant (8), pour garantir que le dispositif de commutation (5) reçoive l'ordre de passer à son état ouvert ou fermé seulement quand aucun courant ne circule à travers la batterie (1).

2. Système selon la revendication 1, dans lequel la source d'énergie comprend une batterie (1) et dans lequel le premier pôle (2) est le pôle positif ou négatif de la batterie (1) et le second pôle (3) est l'autre pôle positif ou négatif de la batterie (1).

3. Système selon l'une quelconque des revendications précédentes, dans lequel le module de commande (7) comprend un dispositif programmable électronique qui est programmé pour ouvrir et fermer de manière séquentielle le dispositif coupe-circuit (4) et le dispositif de commutation (5).
